# EUROPÄISCHE PATENTSCHRIFT

(11) **EP 0 615 905 B1**
(45) Veröffentlichungstag und Bekanntmachung des Hinweises auf die Patenterteilung: **11.12.1996**
(21) Anmeldenummer: 94103359.9
(22) Anmeldetag: 05.03.1994
(51) Int. Cl.: B64D 13/08

(54) **Klimasystem für ein Passagierflugzeug**
Air conditioning system for a passenger aircraft
Installation de conditionnement d'air pour avion pour passager

(30) Priorität: 17.03.1993 DE 4308466
(43) Veröffentlichungstag der Anmeldung: 21.09.1994
(73) Patentinhaber: Daimler-Benz Aerospace Airbus Gesellschaft mit beschränkter Haftung, 21129 Hamburg (DE)
(72) Erfinder: Fischer, Heinz, D-24558 Henstedt-Ulzburg (DE); Müller, Wolfgang, D-21643 Beckdorf (DE); Schmidt, Rüdiger, D-21717 Fredenbeck (DE)
(74) Vertreter: Hansmann, Dierk, Dipl.-Ing.

(56) Entgegenhaltungen:
- WO-A-92/00877
- FR-A- 2 485 473

## Beschreibung

Die Erfindung bezieht sich auf ein Klimasystem für ein Passagierflugzeug, wobei die Klimaluft im wesentlichen durch ein Klimaaggregat geliefert wird und die Passagierkabine vorzugsweise in drei in Kabinenlängsrichtung aneinandergrenzende Klimazonen mit je einem Temperatursensor aufgeteilt ist, wobei jede Klimazone wenigstens ein Luftverteilsystem aufweist, das einerseits mit dem Klimaaggregat in Verbindung steht und andererseits über ein ansteuerbares Mischventil mit einem Zapfluftsystem verbunden ist, wobei je Verteilsystem eine Temperatursteuerung derart vorgesehen ist, daß sich die Temperatur der von dem jeweiligen Verteilsystem gelieferten Luft als Mischtemperatur t + delta t aus der vom Klimaaggregat mit einer vorbestimmten Basistemperatur t und der Zumischung von heißer Zapfluft ergibt, wobei ferner für jede Klimazone ein Temperaturregelsystem vorgesehen ist. Dem Dokument FR-A-2 485 473 ist beispielsweise ein derartiges Klimasystem zu entnehmen.

Der Einhaltung einer vorgegebenen Kabinentemperatur kommt aus Komfortgründen eine besondere Bedeutung zu. Da die Sitzdichte und damit auch die Wärmelast der einzelnen Passagierklassen unterschiedlich ist, erfordert jede Passagierklasse ihr eigenes Temperatur-Regelsystem. Bei dem Klimasystem nach dem vorgenannten Dokument ist ein Digitalrechner zur Erfassung und Verarbeitung der Meßwerte der Temperatursensoren vorgesehen, wobei die jeweilige Solltemperatur über einen Temperaturselektor eingegeben wird. Eine entsprechende Passagierkabine ist daher immer in mehrere mit den Passagierklassen übereinstimmende Klimazonen aufgeteilt, die jeweils eine eigene Temperaturregelung aufweisen. Bei bekannten Klimasystemen dieser Art besteht in der Regel keine Möglichkeit, eine bereits bestehende Aufteilung der Kabine in Klimazonen nachträglich zu ändern.

Demgemäß liegt der Erfindung die Aufgabe zugrunde, ein gattungsgemäßes Klimasystem bezüglich der Aufteilung der Kabine in Klimazonen flexibel zu gestalten, so daß eine Neuaufteilung eines bestehenden Systems ermöglicht wird und die betreffende Änderung durch Eingabe von Steuerbefehlen durchführbar ist.

Diese Aufgabe wird bei einem Klimasystem der vorgenannten Art dadurch gelöst, daß die Kabine in Einleitabschnitte aufgeteilt wird, wobei jeder Einleitabschnitt ein Luftverteilsystem aufweist, wobei die Anzahl der Einleitabschnitte ein Vielfaches der Anzahl der Klimazonen darstellt und die Temperatursteuerungen der einzelnen Luftverteilsysteme mit einer Zonenkontroll-Einrichtung in Verbindung stehen, wodurch jedes Luftverteilsystem wahlweise einer bestimmten Klimazone zugeordnet wird.

Dabei ist insbesondere von Vorteil, daß eine neue Konfiguration der Klimazonen ohne jeglichen Montageaufwand herstellbar ist.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Übersicht über einen Flugzeugrumpf mit mehreren Klimazonen,
- Fig. 2: eine Tabelle mit möglichen Konfigurationen der Klimazonen nach Fig. 1,
- Fig. 3: ein Schaltbild der Temperatursteuerung der Verteilsysteme und
- Fig. 4: die Zonenkontrolleinrichtung im System.

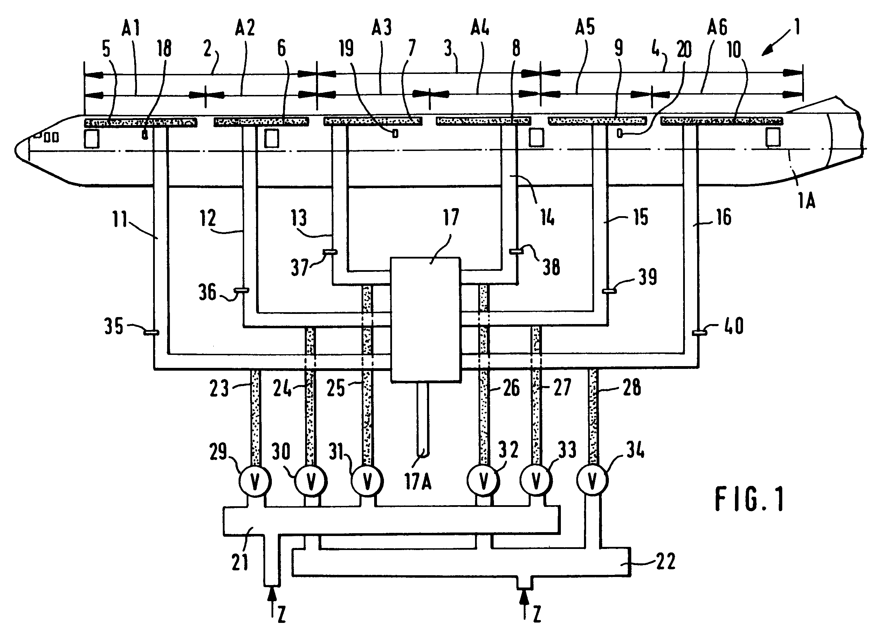

Fig. 1 zeigt eine Beispielausführung der Erfindung mit einem Flugzeugrumpf 1, dessen Passagierkabine, im folgenden kurz Kabine genannt, sich oberhalb des durch die Linie 1A angedeuteten Fußbodens befindet. Die Kabine ist in drei Klimazonen aufgeteilt, und zwar eine Frontzone 2, eine Mittelzone 3 und eine Heckzone 4. Außerdem ist die Kabine beispielsweise in sechs Einleitabschnitte A1 bis A6 aufgeteilt. Jeder Einleitabschnitt, im folgende kurz Abschnitt genannt, weist ein Verteilsystem 5 bis 10 auf, das über Klimaleitungen 11 bis 16 mit einem Klimaluftverteiler 17 in Verbindung steht, der seinerseits über eine Zuleitung 17A mit den hier nicht gezeigten Klimaaggregaten verbunden ist, die aus Zuverlässigkeitsgründen in der Regel zweifach vorhanden sind. Innerhalb der Kabine ist in jeder Klimazone ein Zonensensor 18 bis 20 vorgesehen, der die betreffende Raumtemperatur mißt und Bestandteil eines entsprechenden Regelkreises zur Konstanthaltung der Kabinentemperatur ist. Darüber hinaus ist jeder Zonensensor so angeordnet, daß er sich im Falle einer Neuaufteilung der Klimazonen immer innerhalb derselben Klimazone befindet. Von dem hier nicht gezeigten Zapfluftsystem gelangt Zapfluft Z in zwei Heißluftverteiler 21 und 22, die über einzelne Zumischleitungen 23 bis 28 mit je einer der Klimaleitungen 11 bis 16 verbunden sind. Dabei ist in jede Zumischleitung 23 bis 28 ein Mischventil 29 bis 34 eingeschaltet. Ferner ist jede der besagten Klimaleitungen mit einem Temperatursensor 35 bis 40 versehen. Aus Zuverlässigkeitserwägungen sind die Zumischleitungen 23 bis 28 wie dargestellt verschachtelt. Hierdurch werden die Abschnitte A1,A3 und A5 über den Heißluftverteiler 21 und die Abschnitte A2,A4 und A6 über den Heißluftverteiler 22 mit Zumischluft versorgt. Die Anzahl der Abschnitte mit entsprechenden Luftverteilsystemen beträgt erfindungsgemäß ein Vielfaches der Anzahl der Klimazonen, wodurch die Möglichkeit eröffnet wird, bestimmte Luftverteilsysteme, also Kabinenbereiche, wahlweise bestimmten Klimazonen zuzuordnen. Hierzu ist eine Zonenkontroll-Einrichtung vorgesehen. Die Zuordnung geschieht dadurch, daß je nach gültiger Konfiguration der Klimazonen jeder der drei Regelschaltungen unterschiedliche Mischventile 29 bis 34 zugeschaltet werden. Anhand der dargestellten Anordnung von sechs Abschnitten sind vier verschiedene Konfigurationen von Klimazonen realisierbar.

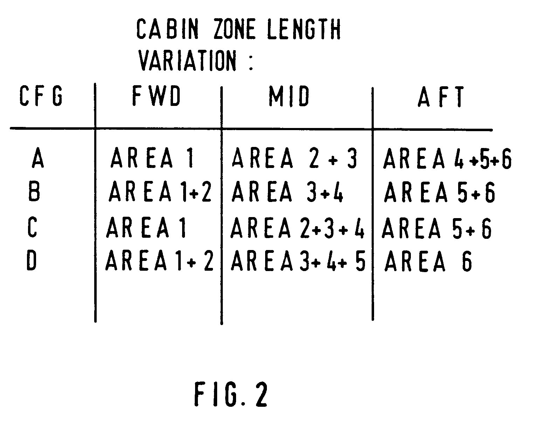

Fig. 2 zeigt eine Tabelle, der die einzelnen realisierbaren Konfigurationen CFG der Klimazonen zu entnehmen sind. In der ersten Spalte erscheinen die einzelnen Konfigurationen A bis D. In der zweiten Spalte sind die jeweils möglichen Formen der Frontzone 2 angegeben. Dementsprechend enthalten die dritte und vierte Spalte die Konfigurationen der Mittelzone 3 und der Heckzone 4. Man ersieht, daß in Fig. 1 die Konfiguration B gemäß der Tabelle nach Fig.2 dargestellt ist. Die Konfiguration B besteht darin, daß die Abschnitte A1 und A2 der Frontzone 2, die Abschnitte A3 und A4 der Mittelzone 3 und die Abschnitte A5 und A6 der Heckzone 4 zugeordnet sind. Auf diese Weise erhält man eine Aufteilung der Kabine, wobei die einzelnen Klimazonen etwa die gleiche Größe haben. Soll eine Konfiguration entstehen, wobei die Frontzone kleiner, die Heckzone aber größer als bisher bemessen sind, so wird die Konfiguration A ausgewählt. In dieser Konfiguration besteht die Frontzone lediglich aus dem Abschnitt 1, wohingegen die Mittelzone und die Heckzone aus den Abschnitten A2 und A3 bzw. A4, A5 und A6 bestehen. Für anders gelagerte Bedürfnisse stehen die Konfigurationen C und D zur Verfügung. Die vorgenannten Änderungen der Kabinenkonfiguration ergeben sich nicht durch Änderungen an der bestehenden Installation sondern beispielsweise einfach durch Betätigen bestimmter Schalter.

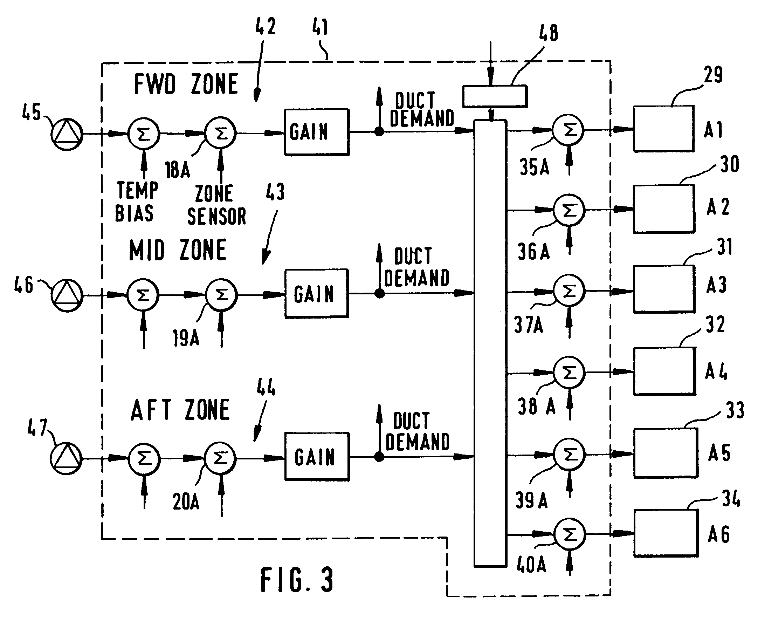

Figur 3 zeigt schematisch anhand eines Blockschaltbildes das Prinzip der Temperatursteuerung des Klimasystems mit der Zonenkontrolleinrichtung 41, worin die Steuerkreise der drei Klimazonen Frontzone, Mittelzone und Heckzone sowie eine Steuerlogik eingeschlossen sind, wobei die mit den Pfeilen 42 bis 44 bezeichneten Zonenkreise jeweils die Temperaturselektoren 45,46 und 47 sowie die den Zonensensoren 18, 19 und 20 zugeordneten Summierer 18A, 19A und 20A enthalten. An die Steuerlogik sind weiterhin die den einzelnen Temperatursensoren 35 bis 40 der Luftverteilsysteme zugeordneten Summierer 35A bis 40A angeschlossen. Die Summierer stehen wiederum mit den Mischventilen 29 bis 34 in Wirkverbindung. Jedes Mischventil 29 bis 34 ist gemäß Fig.1 einem bestimmten Abschnitt A1 bis A6 zugeordnet. Anhand der Zonenkontrolleinrichtung 41 wird die Aufteilung der Klimazonen entsprechend den an einer Schnittstelle 48 eingegebenen Steuerbefehle vorgenommen, indem hier die einzelnen Steuerkreise der Abschnitte einem der drei Zonenkreise 42,43 bzw. 44 zugeordnet werden. Soll beispielsweise die Konfiguration B nach Fig.2 hergestellt werden, so erfolgt die Zuordnung der einzelnen Abschnitte zu den Klimazonen in der Weise, daß die Abschnitte A1 und A2 mit der Frontzone 2, die Abschnitte A3 und A4 mit der Mittelzone 3 und die Abschnitte A5 und A6 mit der Heckzone 3 funktionell verknüpft werden. Soll eine andere Konfigurationen realisiert werden, so werden die betreffenden Verknüpfungen entsprechend Fig. 2 vorgenommen. Die Wirkungsweise der Zonenkontrolleinrichtung 41 beruht auf fachüblichen Maßnahmen der digitalen Steuerungstechnik. Die Eingabe der entsprechenden Befehle kann daher auf jede fachübliche Weise erfolgen, beispielsweise mittels einer Tastatur, eines Diskettenlaufwerkes oder auch durch Datenübertragung von einer anderen digitalen Funktionseinheit aus.

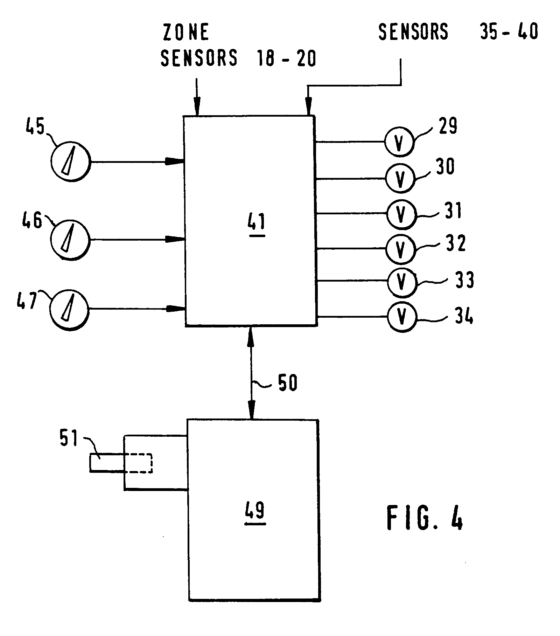

Fig. 4 zeigt die Zonenkontrolleinrichtung 41 mit den extern angeschlossenen Temperaturselektoren 45, 46 und 47 sowie den Mischventilen 29 bis 34. Ferner sind entsprechende Anschlüsse für die Sensoren 18 bis 20 sowie 35 bis 40 vorgesehen. Eine digitale Kabinenkonfigurationseinheit 49 ist über einen Datenbus 50 mit der Zonenkontrolleinrichtung 41 verbunden. Die Kabinenkonfigurationseinheit 49 dient zur digitalen Steuerung der Konfiguration verschiedener Kabinensysteme und übernimmt auch die entsprechende Konfigurierung des Klimasystems. Die Kabinenkonfigurationseinheit 49 weist eine Aufnahme für ein Steckmodul 51 auf, das alle Informationen zur Konfiguration der betreffenden Systeme enthält. Das Steckmodul stellt praktisch einen fest programmierten Datenspeicher dar, in dem u.a. alle Befehle zur Herstellung einer bestimmten Konfiguration des Klimasystems abgespeichert sind. In einer bevorzugten Ausgestaltung basiert das Steckmodul 51 auf einem elektrisch programmierbaren Halbleiterspeicher, (EPROM). Durch Einsetzen eines entsprechend, programmierten Steckmoduls kann beispielsweise jede der Konfigurationen A bis D gemäß Fig. 2 hergestellt werden.

## Patentansprüche

1. Klimasystem für ein Passagierflugzeug, wobei die Klimaluft im wesentlichen durch ein Klimaaggregat geliefert wird und die Passagierkabine vorzugsweise in drei in Kabinenlängsrichtung aneinandergrenzende Klimazonen (2,3,4) mit je einem Zonensensor (18,19,20) zur Temperaturerfassung aufgeteilt ist, wobei jede Klimazone wenigstens ein Luftverteilsystem (5,6,7,8,9,10) aufweist, das einerseits mit dem Klimaaggregat in Verbindung steht und andererseits über ein ansteuerbares Mischventil mit einem Zapfluftsystem verbunden ist, wobei je Verteilsystem eine Temperatursteuerung derart vorgesehen ist, daß sich die Temperatur der von dem jeweiligen Luftverteilsystem (5,6,7,8,9,10) gelieferten Luft als Mischtemperatur t + delta t aus der vom Klimaaggregat mit einer vorbestimmten Basistemperatur (t) und der Zumischung von heißer Zapfluft ergibt, wobei ferner für jede Klimazone ein Temperaturregelsystem vorgesehen ist,
**dadurch gekennzeichnet,** daß die Kabine in Einleitabschnitte (A1,A2,A3,A4,A5,A6) aufgeteilt ist, wobei jeder Einleitabschnitt (A1,A2,A3,A4,A5,A6) ein Luftverteilsystem (5,6, 7,8,9,10) aufweist, wobei die Anzahl der Einleitabschnitte (A1,A2,A3,A4,A5,A6) ein Vielfaches der Anzahl der Klimazonen (2,3,4) darstellt und die Temperatursteuerungen der einzelnen Luftverteilsysteme (5,6,7,8,9,10) mit einer Zonenkontroll-Einrichtung (41) in Verbindung stehen, wodurch jedes Luftverteilsystem (5,6,7,8,9,10) wahlweise einer bestimmten Klimazone (2,3,4) zugeordnet wird.

2. Klimasystem nach Anspruch 1,
dadurch **gekennzeichnet,** daß zur Eingabe der Befehle an die Zonenkontrolleinrichtung (41) für die Zuordnung der Luftverteilsysteme (5 - 10) eine Tastatur vorgesehen ist.

3. Klimasystem nach Anspruch 1,
dadurch **gekennzeichnet,** daß zur Eingabe der Befehle an die Zonenkontrolleinrichtung (41) für die Zuordnung der Luftverteilsysteme (5 - 10) ein Diskettenlaufwerk vorgesehen ist.

4. Klimasystem nach einem der Ansprüche 1 bis 3,
dadurch **gekennzeichnet,** daß die Zonenkontrolleinrichtung (41) zur Eingabe der Zuordnungsbefehle eine Schnittstelle (48) aufweist.

5. Klimasystem nach einem der Ansprüche 1 bis 4,
dadurch **gekennzeichnet,** daß die Zonenkontrolleinrichtung (41) mit einer Kabinenkonfigurationseinheit (49) verbunden ist.

6. Klimasystem nach Anspruch 5,
dadurch **gekennzeichnet,** daß die Kabinenkonfigurationseinheit (49) einen Steckschlitz für ein Steckmodul (51) aufweist.

7. Klimasystem nach Anspruch 6,
dadurch **gekennzeichnet,** daß das Steckmodul (51) auf einem elektrisch programmierbaren Halbleiterspeicher basiert.

## Claims

1. Air conditioning system for a passenger aircraft, the conditioned air being supplied substantially by means of an air conditioning unit and the passenger cabin preferably being divided into three air conditioning zones (2, 3, 4), which are adjacent to one another in cabin longitudinal direction and each have a zone sensor for temperature detection, each air conditioning zone comprising at least one air distribution system (5, 6, 7, 8, 9, 10) which is connected on the one hand to the air conditioning unit and on the other hand by a controllable mixing valve to an air dispensing system, one temperature control device per distribution system being provided such that the temperature of the air supplied by the respective air distribution system (5, 6, 7, 8, 9, 10) arises as mixed temperature t + delta t from the air of the air conditioning unit at a predetermined base temperature (t) and the admixture of hot dispensed air, a temperature regulating system further being provided for each air conditioning zone,
**characterized in** that the cabin is divided into inlet portions (A1, A2, A3, A4, A5, A6), each inlet portion (A1, A2, A3, A4, A5, A6) having an air distribution system (5, 6, 7, 8, 9, 10), the number of inlet portions (A1, A2, A3, A4, A5, A6) being a multiple of the air conditioning zones (2, 3, 4) and the temperature control devices of the individual air distribution systems (5, 6, 7, 8, 9, 10) being connected to a zone control device (41), as a result of which each air distribution system (5, 6, 7, 8, 9, 10) is selectively assigned to a specific air conditioning zone (2, 3, 4).

2. Air conditioning system according to claim 1,
**characterized** in that a keyboard is provided for entering the commands to the zone control device (41) for assignment of the air distribution systems (5 - 10).

3. Air conditioning system according to claim 1,
**characterized** in that a diskette drive is provided for entering the commands to the zone control device (41) for assignment of the air distribution systems (5 - 10).

4. Air conditioning system according to one of claims 1 to 3,
**characterized** in that the zone control device (41) has an interface (48) for entering the assignment commands.

5. Air conditioning system according to one of claims 1 to 4,
**characterized** in that the zone control device (41) is connected to a cabin configuration unit (49).

6. Air conditioning system according to claim 5,
**characterized** in that the cabin configuration unit (49) has an insertion slot for a plug-in module (51).

7. Air conditioning system according to claim 6,
**characterized** in that the plug-in module (51) is based on an electrically programmable semiconductor memory.

## Revendications

1. Dispositif destiné à mouvoir une porte d'avion (1, 25) qui, pour être ouverte, est pivotée vers l'extérieur et, pour être fermée, vers l'intérieur dans la structure du fuselage et qui est ensuite amenée en face de la structure du fuselage dans une position à engagement positif, la transmission des forces résultant de la pression interne en cabine s'effectuant par l'intermédiaire de ferrures de contact, la porte (1, 25) étant maintenue au cours du processus de pivotement par un bras de support (3, 27) par une extrémité proche du fuselage et une autre proche de la porte et des moteurs électriques étant prévus afin d'actionner la porte de l'avion (1, 25), lesdits moteurs électriques étant prévus de telle manière pour les fonctions de pivotement vers l'intérieur, de fermeture et de verrouillage ainsi que pour les fonctions inverses que les différentes fonctions sont coordonnées, **caractérisé en ce que** les moteurs électriques sont prévus sous la forme de moteurs pas à pas pouvant être commandés par programme (5, 8, 12, 13, 18, 19, 32, 32a, 35, 36, 43, 44) et en ce que les diverses fonctions se déroulent de façon coordonnée en raison des programmes stockés, la porte (1, 25) étant reliée au bras de support (3, 27) au moyen d'un parallélogramme et un moteur pas à pas (8) destiné à soulever ou à abaisser la porte (1, 25) par l'intermédiaire d'une commande à broches (24) étant prévu qui agit par l'intermédiaire d'un levier (20) de telle façon sur le parallélogramme que la porte (1, 25), en cas de retrait ou d'insertion de la commande à broches (24), est soulevée ou abaissée par rapport au bras de support (3, 27).

2. Dispositif destiné à mouvoir une porte d'avion (1, 25) qui, pour être ouverte, est pivotée vers l'extérieur et, pour être fermée, vers l'intérieur dans la structure du fuselage et qui est ensuite amenée en face de la structure du fuselage dans une position à engagement positif, la transmission des forces résultant de la pression interne en cabine s'effectuant par l'intermédiaire de manettes, la porte (1, 25) étant maintenue au cours du processus de pivotement par un bras de support (3, 27) par une extrémité proche du fuselage et une autre proche de la porte et des moteurs électriques étant prévus afin d'actionner la porte de l'avion (1, 25), lesdits moteurs électriques étant prévus de telle manière pour les fonctions de pivotement vers l'intérieur, de fermeture et de verrouillage ainsi que pour les fonctions inverses que les différentes fonctions sont coordonnées et, pour le pivotement vers l'intérieur et l'extérieur de la porte (1, 25) étant prévu un moteur pas à pas (5, 32) qui se trouve de telle manière en connexion active avec le bras de support (3, 27) que ce dernier peut pivoter par son extrémité proche du fuselage au moyen du moteur pas à pas (5, 32) autour d'un axe (4, 28) fixé au fuselage, caractérisé en ce que les moteurs électriques sont prévus de telle façon sous la forme de moteurs pas à pas pouvant être commandés par programme (5, 8, 12, 13, 18, 19, 32, 32a, 35, 36, 43, 44) que les différentes fonctions se déroulent de façon coordonnée en raison des programmes stockés et en ce que le bras de support (27) présente sur son extrémité proche de la porte un axe plus ou moins vertical (29) et en ce que un moteur de pivotement (32a) est prévu de telle façon que la porte (25) peut être pivotée au moyen du moteur de pivotement (32a) par rapport au bras de support (27) autour de l'axe (29).

3. Dispositif selon la revendication 1, caractérisé en ce que dans la zone supérieure de la porte (1, 25) sont prévus deux moteurs pas à pas (12, 13) destinés à actionner les crochets de verrouillage (9, 10).

4. Dispositif selon la revendication 2, caractérisé en ce que la structure (26) de la porte (25) présente sur ses flancs latéraux au moins deux manettes, chaque manette étant pourvue d'un moteur pas à pas (39 à 41) par l'intermédiaire duquel la manette peut être tournée en position d'ouverture ou de fermeture.

5. Dispositif selon la revendication 4, caractérisé en ce que dans les zones supérieure et inférieure de la porte (1, 25) est disposé de manière à pouvoir pivoter autour d'un axe plus ou moins horizontal un volet de raccourcissement (30, 31) et en ce que chaque volet de raccourcissement (30, 31) est pourvu d'un moteur pas à pas (35, 36) destiné à actionner lesdits volets de raccourcissement (30, 31).

6. Dispositif selon l'une ou l'autre des revendications 1 à 5, caractérisé en ce que au moins un des moteurs pas à pas (5, 8, 12, 13, 18, 19, 32, 32a, 35, 36, 43, 44) est pourvu d'un engrenage assurant une diminution du nombre de tours.

7. Dispositif selon l'une ou l'autre des revendications 1 à 6, caractérisé en ce que dans la zone inférieure de la porte (1, 25) sont prévus deux moteurs pas à pas destinés à actionner des leviers de toboggans d'évacuation (16, 17).
